# EUROPÄISCHE PATENTSCHRIFT

(11) **EP 3 004 617 B1**
(45) Veröffentlichungstag und Bekanntmachung des Hinweises auf die Patenterteilung: **29.11.2017**
(21) Anmeldenummer: 14720551.2
(22) Anmeldetag: 23.04.2014
(51) Int. Cl.: F02M 25/08, B60K 15/035, G01N 25/18, G01M 3/32

(54) **VERFAHREN ZUR DURCHBRUCHSÜBERWACHUNG EINES KRAFTSTOFFDAMPFBEHÄLTER**
METHOD FOR MONITORING BREAKTHROUGH OF A FUEL VAPOR CANISTER
PROCÉDÉ DE DIAGNOSTIC DE SATURATION D'UN ABSORBEUR DE VAPEURS DE CARBURANT

(30) Priorität: 24.05.2013 DE 102013209715
(43) Veröffentlichungstag der Anmeldung: 13.04.2016
(73) Patentinhaber: Continental Automotive GmbH, 30165 Hannover (DE)
(72) Erfinder: WEIGL, Manfred, 93161 Sinzing / Viehhausen (DE); GRASS, Philippe, 93053 Regensburg (DE)
(86) Internationale Anmeldenummer: PCT/EP2014/058207
(87) Internationale Veröffentlichungsnummer: WO 2014/187635

(56) Entgegenhaltungen:
- EP-A1- 0 488 254
- DE-A1-102008 045 322
- US-A1- 2004 060 343
- US-A1- 2005 229 688

## Beschreibung

Die Erfindung betrifft ein Verfahren zur Durchbruchsüberwachung eines Speicherelementes eines Kraftstofftanksystems.

Zur Verringerung der von Kraftfahrzeugen ausgehenden Schadstoffemissionen wurden in den vergangenen Jahrzehnten zahlreiche Maßnahmen eingeführt. Eine dieser Maßnahmen besteht darin, ein Kraftstofftanksystem einzusetzen, bei dem ein Kraftstofftank mit einem Speicherelement zur temporären Speicherung von Kohlenwasserstoffen verbunden ist. Bei der Betankung von Kraftfahrzeugen mit Kraftstoffen kommt es zum Ausgasen von Kohlenwasserstoffen aus dem Kraftstoff, wobei die Kohlenwasserstoffe nicht in die Atmosphäre gelangen sollen. Auch bei hohen Temperaturen oder Fahrten über unebene Untergründe kommt es verstärkt zu Ausgasungen von Kohlenwasserstoffen aus dem Kraftstoff, wobei effektiv dafür gesorgt werden muss, dass diese Kohlenwasserstoffe nicht in die Atmosphäre entweichen. Insbesondere bei Hybridfahrzeugen, bei denen der Verbrennungsmotor über weite Fahrstrecken vollständig still steht, müssen ausgegaste Kohlenwasserstoffe effektiv zwischengespeichert, um später bei einem erneuten Starten des Verbrennungsmotors verbrannt zu werden. Hierzu haben sich Kraftstofftanksysteme bewährt, die aus einem Kraftstofftank und einem Speicherelement zur temporären Speicherung von Kohlenwasserstoffen bestehen, wobei der Kraftstofftank und das Speicherelement derart miteinander verbunden sind, dass die Kohlenwasserstoffe, die aus einem im Kraftstofftank befindlichen Kraftstoff ausgasen, im dem Speicherelement eingespeichert werden, wobei das Speicherelement mit einer ersten Leitung verbunden ist, durch die Frischluft zu dem Speicherelement förderbar ist und das Speicherelement mit einer zweiten Leitung verbunden ist, die das Speicherelement mit einer Ansaugleitung verbindet, durch die mit Kohlenwasserstoffen angereicherte Frischluft aus dem Speicherelement zu der Ansaugleitung förderbar ist. Auf diese Art und Weise kann das Speicherelement zyklisch mit Frischluft gespült werden und die eingespeicherten Kohlenwasserstoffe können einer Ansaugleitung zugeführt werden, die den Verbrennungsmotor mit dem Luftfilter verbindet und die den Verbrennungsmotor mit Luft zur Verbrennung versorgt. Damit können die aus dem Kraftstofftank ausgegasten Kohlenwasserstoffe in dem Verbrennungsmotor verbrannt werden und ein Entweichen der Kohlenwasserstoffe in die Atmosphäre kann sicher verhindert werden. Ein Beispiel für ein Kraftstofftanksystem nach dem Stand der Technik findet sich in der PCT Anmeldung mit dem Aktenzeichen PCT/KR2011/006516. Das Speicherelement verfügt jedoch nur über eine begrenzte Speicherkapazität für die aus dem Kraftstoff ausgasenden Kohlenwasserstoffe, was insbesondere bei Hybridfahrzeugen problematisch ist, da der Verbrennungsmotor eines Hybridfahrzeuges über lange Strecken und Zeiten still steht. Wenn die Kapazitätsgrenze des Speicherelementes erreicht ist, droht bei weiterem Nachströmen von Kohlenwasserstoffen aus dem Kraftstofftank in das Speicherelement ein sogenannter Durchbruch der Kohlenwasserstoffe durch das Speicherelement. Bei einem solchen Durchbruch des Speicherelementes können keine weiteren Kohlenwasserstoffe von dem Speicherelement aufgefangen werden und die Kohlenwasserstoffe suchen sich einen Weg durch das Speicherelement in die Umgebung des Tanksystems und somit in die Atmosphäre. Daher muss ein Durchbruch des Speicherelementes sicher während der Gesamten Lebensdauer des Kraftfahrzeuges erkannt werden, um "on Bord" also während des Betriebes des Kraftfahrzeuges den Durchbruch des Speicherelementes zu verhindern, indem zum Beispiel ein Spülprozess des Speicherelements eingeleitet wird, wobei die ausgegasten Kohlenwasserstoffe durch eine Verbrennung in dem Verbrennungsmotor abgebaut werden. Die EP 0 488 254 A1 offenbart ein Verfahren zur Durchbruchsüberwachung eines Speicherelementes, wobei ein Sensor zum Erfassen der Konzentration des Kraftstoffdampfes in dem Speicherelement angeordnet ist.

Die US 2005/0229688 A1 offenbart eine Fehlerdiagnostikvorrichtung für Kraftstoffentlüftungssysteme und eine Kraftstoffentlüftungsvorrichtung.

Die DE 10 2008 045 322 A1 offenbart eine Anordnung zur Messung einer Kohlenwasserstoffkonzentration eines Gasstroms in einer Leitung, die mindestens einen Sensor zur Messung einer Kohlenwasserstoffkonzentration aufweist, der in Bezug auf die Leitung zurückgesetzt angeordnet ist.

Eine Aufgabe der vorliegenden Erfindung ist es daher, ein sicheres und kostengünstiges Verfahren anzugeben, mit dem ein Durchbruch eines Speicherelementes während des Betriebes des Kraftfahrzeuges festgestellt werden kann.

Die Aufgabe wird durch ein Verfahren zur Durchbruchsüberwachung eines Speicherelementes nach dem unabhängigen Anspruch gelöst.

Wenn der Massenstromsensor bei geschlossenen ersten Ventil und/oder bei geschlossenen zweiten Ventil und/oder bei stillstehender Luftpumpe eine Änderung thermischen Leitfähigkeit der unbewegten Luftmasse in der ersten Leitung erfasst, kann der ohnehin vorhandene Massenstromsensor zur Erkennung eines Durchbruchs des Speicherelementes eingesetzt werden. Der Massenstromsensor im Kraftstofftanksystem wird ursprünglich zur Vermessung der in das System während des Spülvorganges geförderten Luftmasse verwendet, um eine Information über die zusätzlich in die Ansaugleitung eingebrachte Luftmasse und die mit dieser Luftmasse zur Ansaugleitung geführte Kohlenwasserstoffmenge zu erhalten. Wenn jedoch kein Spülvorgang erfolgt, weil das Speicherelement noch Speicherkapazität aufweist, wurde der Luftmassenmesser bei Verfahren nach dem Stand der Technik nicht benötigt, da kein Luftmassenstrom vorlag, der zu vermessen war. Nach dem erfindungsgemäßen Verfahren erhält der Massenstromsensor nun eine neue Aufgabe für die Zeit in der kein Spülvorgang des Kraftstofftanksystems durchgeführt wird. Erfindungsgemäß kann der Massenstromsensor in der Zeit in der kein Spülvorgang des Kraftstofftanksystems erfolgt als Sensor zur Durchbruchsüberwachung des Speicherelementes eingesetzt werden. Wenn sich nämlich Kohlenwasserstoffe durch das Speicherelement in die erste Leitung durchschlagen und in der ersten Leitung kein Luftmassenstrom vorliegt, also das System nicht gespült wird, ändert sich die thermischen Leitfähigkeit der nach dem Durchbruch des Speicherelementes mit Kohlenwasserstoffen angereicherten Luft. Diese Änderung der thermischen Leitfähigkeit der Luft in der ersten Leitung kann vom Massenstromsensor erfasst werden, womit ein Durchbruch des Speicherelementes sicher erkannt werden kann.

Bei einer Weiterbildung ist die Luftpumpe als Radialpumpe ausgebildet. Eine Radialpumpe weist einen gut reproduzierbaren Zusammenhang zwischen dem Druck den sie erzeugt und der Drehzahl mit der sie angetrieben wird, bzw. mit der Leistung die sie aufnimmt auf, wenn die physikalischen Parameter, zum Beispiel die Temperatur, der geförderten Luft bekannt sind. Wenn die Radialpumpe jedoch still steht können nach einem Durchbruch des Speicherelementes Kohlenwasserstoffe bis zu dem Massenstromsensor vordringen, womit der Massenstromsensor auch vor der Luftpumpe zur Durchbruchserkennung des Speicherelementes genutzt werden kann.

Bei einer Ausgestaltung der Erfindung ist der Massenstromsensor als Sensor, der nach dem thermischen Prinzip arbeitet ausgebildet. Derartige Massenstromsensoren sind robuste und langlebige Bauteile, die zudem sehr wirtschaftlich in hohen Stückzahlen hergestellt werden können. Es ist vorteilhaft, wenn der Massenstromsensor im Gehäuse der Luftpumpe integriert ist.

Wenn in der ersten Leitung zusätzlich ein erstes Ventil angeordnet ist, kann bei einem Durchbruch des Speicherelementes sofort durch das Schließen des ersten Ventils ein Austreten der Kohlenwasserstoffe in die Atmosphäre verhindert werden.

Bei einer vorteilhaften Ausgestaltung der Erfindung wird ein Durchbruch des Speicherelementes erkannt, wenn der Massenstromsensor bei einem geschlossenen ersten Ventil eine Änderung der thermischen Leitfähigkeit der Luft in der ersten Leitung erfasst. Wenn das erste Ventil schon nach dem Abschluss eines Spülvorganges geschlossen wird, ist ein Austreten der Kohlenwasserstoffe durch die erste Leitung in die Atmosphäre auch bei einem Speicherdurchbruch unmöglich. Der Massenstromsensor erkennt den Speicherdurchbruch dennoch und es können geeignete Maßnahmen zur Entleerung des Speicherelementes eingeleitet werden.

Eine vorteilhafte Ausführungsform der Erfindung wird anhand der Figuren beschrieben.
- Fig. 1: zeigt einen Verbrennungsmotor mit einem erfindungsgemäßen Kraftstofftanksystem,
- Fig. 2: zeigt ein weiteres Beispiel für einen Massenstromsensor.

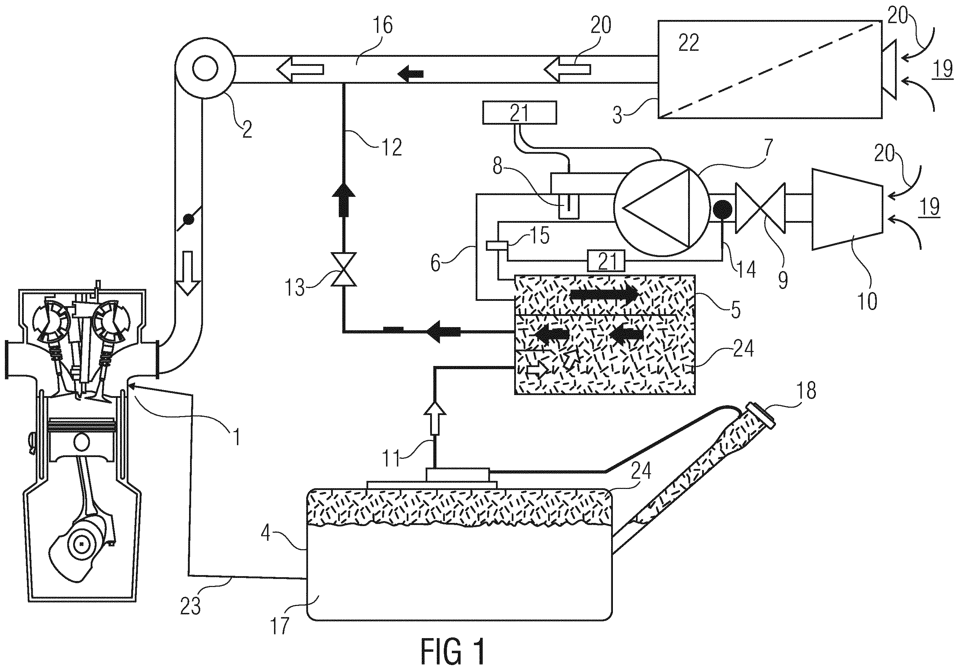

Fig. 1 zeigt einen Verbrennungsmotor 1. Der Verbrennungsmotor 1 wird über eine Ansaugleitung 16 mit Frischluft 20 versorgt. Ausgehend von der Frischluftseite 19 wird Frischluft 20 über einen Luftfilter 22 in die Ansaugleitung 16 geführt und eventuell mit einem Abgasturbolader 2 oder einem Kompressor verdichtet und dann den Brennkammern des Verbrennungsmotors 1 zugeführt. Darüber hinaus wird dem Verbrennungsmotor 1 Kraftstoff 17 aus dem Kraftstofftank 4 über eine Kraftstoffleitung 23 zugeführt.

Fig. 1 zeigt weiterhin das Kraftstofftanksystem mit einem Kraftstofftank 4 und einem Speicherelement 5 zur temporären Speicherung von Kohlenwasserstoffen 24. Der Kraftstofftank 4 und das Speicherelement 5 sind derart miteinander verbunden, dass die Kohlenwasserstoffe 24, die aus einem im Kraftstofftank 4 befindlichen Kraftstoff 17 ausgasen, in dem Speicherelement 5 eingespeichert werden können. Das Speicherelement 5 kann beispielsweise als Aktivkohlespeicher ausgebildet sein. Ein Aktivkohlespeicher ist ein geschlossener Kanister, in dem Kohlenstoff derart angeordnet ist, dass sich an dem Kohlenstoff die zu speichernden Kohlenwasserstoffe 24 anlagern. Das Speicherelement 5 hat jedoch eine begrenzte Speicherkapazität, so dass das Speicherelement 5 regelmäßig entleert werden muss, indem Frischluft 20 z. B. über einen Staubfilter 10 angesaugt wird und über eine erste Leitung 6 mithilfe einer Luftpumpe 7 in das Speicherelement 5 gedrückt wird. Die Frischluft 20 durchströmt die Aktivkohle in dem Speicherelement 5 und nimmt dabei Kohlenwasserstoffe 24 auf, wonach die mit den Kohlenwasserstoffen 24 angereicherte Frischluft 20 entlang einer zweiten Leitung 12 zu der Ansaugluftleitung 16 gefördert wird. In der Ansaugluftleitung 16 vermischt sich die mit den Kohlenwasserstoffen 24 angereicherte Frischluft 20 mit der Frischluft 20, die über den Luftfilter 22 angesaugt wird. Damit können die Kohlenwasserstoffe 24 dem Verbrennungsmotor 1 zugeführt werden, wobei die Kohlenwasserstoffe 24 in den Brennkammern verbrannt werden können.

Das in Fig. 1 dargestellte Kraftstofftanksystem weist ein erstes Ventil 9 auf, das in der ersten Leitung 6 in Richtung des Frischluftstroms vor dem Speicherelement 5 angeordnet ist. Ebenfalls in der ersten Leitung 6 ist zwischen dem ersten Ventil 9 und dem Speicherelement 5 eine Luftpumpe 7 angeordnet. Die erste Leitung mündet in dem Speicherelement 5. In einer zweiten Leitung 12 zwischen dem Speicherelement 5 und der Ansaugleitung 16 ist ein zweites Ventil 13 angeordnet. Darüber hinaus kann in der ersten Leitung 6 ein Temperatursensor 14 angeordnet sein, der die Temperatur der durch die Luftpumpe 7 geförderten Frischluft 20 erfasst.

Weiterhin ist in der ersten Leitung 6, vorzugsweise im Gehäuse der Luftpumpe 7, ein Massenstromsensor 8 angeordnet sein. Dieser Massenstromsensor 8 kann z. B. thermisch nach dem Prinzip arbeiten. Ein Beispiel für einen Massenstromsensor 8 der nach dem thermischen Prinzip arbeite ist ein Hitzdrahtanemometer. Innerhalb des Massenstromsensors 8 befinden sich zumindest zwei durch elektrischen Strom beheizte Drähte, zum Beispiel Platindrähte, oder Schichtwiderstände. Ein Draht oder Widerstand wird direkt von der vorbei strömenden Luft gekühlt, der andere befindet sich in von der strömenden Luft abgeschirmter Lage. Durch den elektrischen Stromfluss erhitzen sich beide Widerstandselemente, wobei die vorbeiströmende Luft das nicht abgeschirmte Heizelement stärker kühlt als das von der Luft abgeschirmte. Dieses heizt sich daher stärker auf und wird dadurch hochohmiger. Aus den Widerstandswerten der beiden Heizelemente und deren Differenz lassen sich mittels eines Kennfeldes der Massenstrom der Frischluft in der ersten Leitung und das Vorhandensein von Kohlenwasserstoffen in der Luft, also auch Durchbruch des Speicherelementes, ableiten.

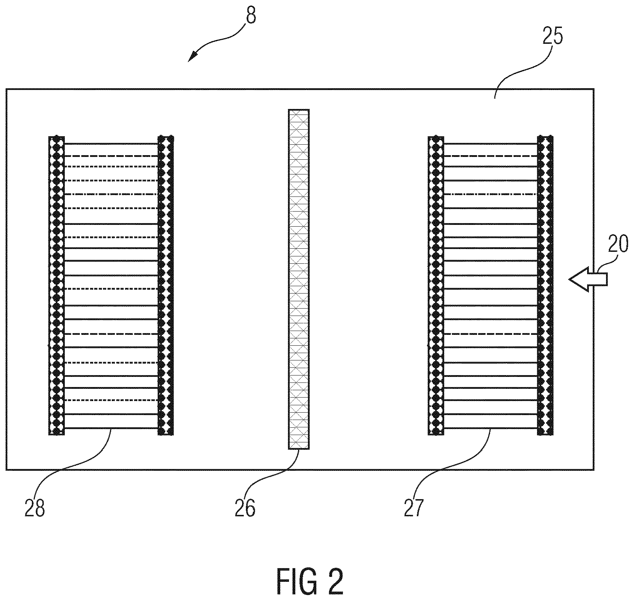

Ein weiteres Beispiel für einen Massenstromsensor 8 der nach dem thermischen Prinzip arbeite ist in Figur 2 dargestellt. Auf einem Trägerelement 25, das zum Beispiel aus Siliziumnitrat (Glas) bestehen kann, ist ein Heizelement 26, vorzugsweise ein elektrisches Widerstandsheizelement, aufgebracht. In Richtung des Luftstromes 20 vor und hinter dem Heizelement 26 sind auf dem Trägerelement 25 ein erstes Temperaturmesselement 27 und ein zweites Temperaturmesselement 28 angeordnet. Das erste und das zweite Temperaturmesselement 27, 28 können als Thermopiles ausgebildet sein.

Ein erfindungsgemäßes Verfahren zur Durchbruchsüberwachung eines Speicherelementes 5 eines Kraftstofftanksystems kann mit dem in Fig. 1 dargestellten Kraftstofftanksystem ausgeführt werden. Bei dem erfindungsgemäßen Verfahren wird zunächst das erste Ventil 9 und/oder das zweiten Ventil 13 geschlossenen und/oder es wird die Luftpumpe 7 zum Stillstand gebracht. Durch diese Maßnahmen wird sichergestellt, dass die Luft in der ersten Leitung 6 nicht bewegt wird, womit der Massenstromsensor 8 keinen Luftmassenstrom erfassen kann. Nach den bekannten Verfahren zur Durchbrucherkennung des Speicherelementes 5 wäre der Massenstromsensor 8 in dieser Situation nutzlos. Erfindungsgemäß wird der Massenstromsensor 8 jedoch nun genutzt, um die Beladung des Speicherelementes 5 so weit zu überwachen, dass ein Durchbruch von Kohlenwasserstoffen, also ein Überlaufen der Speicherelementes 5, sicher erkannt wird. Dies geschieht, indem der Massenstromsensor 8 eine Änderung thermischen Leitfähigkeit der unbewegten Luftmasse in der ersten Leitung 6 erfasst. Mit dem Begriff der unbewegten Luftmasse ist in diesem Zusammenhang gemeint, dass in der ersten Leitung 6 kein Luftmassenstrom vorhanden ist. Natürlich bewegen sich die einzelnen Teilchen in der Luft in der ersten Leitung aber diese Bewegung erfolgt ungeordnet und im Mittel über alle bewegten Luftteilchen ergibt sich keine Bewegung der gesamten Luftmasse, wenn das erste Ventil 9 und/oder das zweiten Ventil 13 geschlossenen ist und/oder wird die Luftpumpe 7 zum Stillstand gebracht wurde. In der unbewegten oder still stehenden Luftmasse liegt also lediglich die Brownsche Molekularbewegung vor.
Sollte nun bei einer stillstehenden Luftmasse eine Änderung thermischen Leitfähigkeit der Luft in der ersten Leitung 6 vom Massenstromsensor 8 erfasst werden, so kann dies nur aufgrund eines Durchbruchs der Kohlenwasserstoffe durch das Speicherelement 5 eingetreten sein. Damit kann der Durchbruch der Kohlenwasserstoffe durch das Speicherelement 5 sicher erkannt werden und es können Maßnahmen ergriffen werden, die ein Austreten der Kohlenwasserstoffe in die Umgebung des Kraftstofftanksystems verhindern. Das umgehende Einleiten einer Spülung des Speicherelements 5 mit Frischluft ist eine geeignete Maßnahme, die den Austritt der Kohlenwasserstoffe verhindern kann. Bei Hybridfahrzeugen ist es eventuell notwendig den Verbrennungsmotor zu starten, damit die aus dem Speicherelement 5 ausgespülten Kohlenwasserstoffe auch verbrannte werden können, All diese Maßnahmen können von einem Steuergerät 21 eingeleitet werden, wobei das Steuergerät 21 auch die von dem Massenstromsensor 8 erfassten Daten verarbeiten kann und Informationen über die Stellung des ersten Ventils 9 und des zweiten Ventils 13 sowie des Betriebszustandes der Luftpumpe 7 erfassen kann.

## Patentansprüche

1. Verfahren zur Durchbruchsüberwachung eines Speicherelementes (5) eines Kraftstofftanksystems, wobei das Kraftstofftanksystem einen Kraftstofftank (4) aufweist und das Speicherelement (5) zur temporären Speicherung von Kohlenwasserstoffen ausgebildet ist, wobei der Kraftstofftank (4) und das Speicherelement (5) derart miteinander verbunden sind, dass Kohlenwasserstoffe, die aus einem im Kraftstofftank befindlichen Kraftstoff ausgasen, in dem Speicherelement (5) eingespeichert werden, wobei das Speicherelement (5) mit einer ersten Leitung (6) verbunden ist, durch die Frischluft zu dem Speicherelement förderbar ist und das Speicherelement mit einer zweiten Leitung (12) verbunden ist, die das Speicherelement (5) mit einer Ansaugleitung (16) verbindet und durch die mit Kohlenwasserstoffen angereicherte Frischluft aus dem Speicherelement zu der Ansaugleitung (16) förderbar ist, wobei in der ersten Leitung (6) in Richtung des Frischluftstroms vor dem Speicherelement (5) ein Massenstromsensor (8) und eine Luftpumpe (7) angeordnet sind und in der zweiten Leitung (12) zwischen dem Speicherelement (5) und der Ansaugleitung (16) ein zweites Ventil (13) angeordnet ist, **dadurch gekennzeichnet, dass** ein Durchbruch des Speicherelementes (5) erkannt wird, wenn der Massenstromsensor (8) bei geschlossenem zweiten Ventil (13) und/oder bei still stehender Luftpumpe (7) eine Änderung der thermischen Leitfähigkeit der unbewegten Luftmasse in der ersten Leitung (6) erfasst.

2. Verfahren zur Durchbruchsüberwachung eines Speicherelementes (5) nach Anspruch 1, **dadurch ge - kennzeichnet,** dass die Luftpumpe (7) als Radialpumpe ausgebildet ist.

3. Verfahren zur Durchbruchsüberwachung eines Speicherelementes (5) nach Anspruch 1 oder 2, **dadurch gekennzeichnet, dass** der Massenstromsensor (8) als Sensor, der nach dem thermischen Prinzip arbeitet ausgebildet ist.

4. Verfahren zur Durchbruchsüberwachung eines Speicherelementes (5) nach Anspruch 3, **dadurch gekennzeichnet, dass** der Massenstromsensor (8) im Gehäuse der Luftpumpe (7) integriert ist.

5. Verfahren zur Durchbruchsüberwachung eines Speicherelementes (5) nach Anspruch 4, **dadurch gekennzeichnet, dass** in der ersten Leitung (6) zusätzlich ein erstes Ventil (9) stromaufwärts der Luftpumpe in Richtung des Frischluftstroms angeordnet ist.

6. Verfahren zur Durchbruchsüberwachung eines Speicherelementes (5) nach Anspruch 5, **dadurch gekennzeichnet, dass** ein Durchbruch des Speicherelementes (5) erkannt wird, wenn der Massenstromsensor (8) bei geschlossenem ersten Ventil (9) eine Änderung der thermischen Leitfähigkeit der Luft in der ersten Leitung (6) erfasst.

## Claims

1. Method for monitoring for a breakthrough through a storage element (5) of a fuel tank system, wherein the fuel tank system has a fuel tank (4) and the storage element (5) is designed for the temporary storage of hydrocarbons, wherein the fuel tank (4) and the storage element (5) are connected to one another such that hydrocarbons outgassed from a fuel situated in the fuel tank are stored in the storage element (5), wherein the storage element (5) is connected to a first line (6) through which fresh air can be delivered to the storage element, and the storage element is connected to a second line (12) which connects the storage element (5) to an intake line (16) and through which fresh air enriched with hydrocarbons can be delivered from the storage element to the intake line (16), wherein a mass flow sensor (8) and an air pump (7) are arranged in the first line (6) upstream of the storage element (5) as viewed in the direction of the fresh air flow, and a second valve (13) is arranged in the second line (12) between the storage element (5) and the intake line (16),
**characterized in that** a breakthrough through the storage element (5) is identified if the mass flow sensor (8) detects a change in the thermal conductivity of the unmoved air mass in the first line (6) when the second valve (13) is in a closed state and/or when the air pump (7) is at a standstill.

2. Method for monitoring for a breakthrough through a storage element (5) according to Claim 1, **characterized in that** the air pump (7) is in the form of a radial pump.

3. Method for monitoring for a breakthrough through a storage element (5) according to Claim 1 or 2, **characterized in that** the mass flow sensor (8) is in the form of a sensor which operates on the basis of the thermal principle.

4. Method for monitoring for a breakthrough through a storage element (5) according to Claim 3, **characterized in that** the mass flow sensor (8) is integrated in the housing of the air pump (7).

5. Method for monitoring for a breakthrough through a storage element (5) according to Claim 4, **characterized in that** a first valve (9) is additionally arranged in the first line (6) upstream of the air pump as viewed in the direction of the fresh air flow.

6. Method for monitoring for a breakthrough through a storage element (5) according to Claim 5, **characterized in that** a breakthrough through the storage element (5) is identified if the mass flow sensor (8) detects a change in the thermal conductivity of the air in the first line (6) when the first valve (13) is in a closed state.

## Revendications

1. Procédé de surveillance des perforations d'un élément de réservoir (5) d'un système de cuve de carburant, le système de cuve de carburant présentant une cuve (4) de carburant et l'élément de réservoir (5) étant configuré pour conserver temporairement des hydrocarbures, la cuve (4) de carburant et l'élément de réservoir (5) étant reliés l'un à l'autre de telle sorte que des hydrocarbures qui se dégagent en phase gazeuse du carburant présent dans la cuve à carburant sont conservés dans l'élément de réservoir (5),
l'élément de réservoir (5) étant relié à un premier conduit (6) par lequel l'air frais peut être transporté vers l'élément de réservoir et l'élément de réservoir étant relié à un deuxième conduit (12) qui relie l'élément de réservoir (5) à un conduit d'aspiration (16) et par lequel l'air frais enrichi en hydrocarbures peut être transporté depuis l'élément de réservoir jusqu'au conduit d'aspiration (16),
un capteur (8) d'écoulement massique et une pompe à air (7) étant disposés dans le premier conduit (6) dans la direction de l'écoulement d'air frais en amont de l'élément de réservoir (5) et une deuxième soupape (13) étant disposée dans le deuxième conduit (12) entre l'élément de réservoir (5) et le conduit d'aspiration (16),
**caractérisé en ce que**
une perforation de l'élément de réservoir (5) est détectée si le capteur (8) d'écoulement massique saisit une modification de la conductivité thermique de la masse d'air immobile dans le premier conduit (6) lorsque la deuxième soupape (13) est fermée et/ou lorsque la pompe à air (7) est à l'arrêt.

2. Procédé de surveillance des perforations d'un élément de réservoir (5) selon la revendication 1, **caractérisé en ce que** la pompe à air est configurée comme pompe radiale.

3. Procédé de surveillance des perforations d'un élément de réservoir (5) selon les revendications 1 ou 2, **caractérisé en ce que** le capteur (8) d'écoulement massique est configuré comme capteur fonctionnant selon le principe thermique.

4. Procédé de surveillance des perforations d'un élément de réservoir (5) selon la revendication 3, **caractérisé en ce que** le capteur (8) d'écoulement massique est intégré dans le boîtier de la pompe à air (7).

5. Procédé de surveillance des perforations d'un élément de réservoir (5) selon la revendication 4, **caractérisé en ce qu'**une première soupape (9) est disposée en amont de la pompe dans la direction de l'écoulement d'air frais en supplément dans le premier conduit (6).

6. Procédé de surveillance des perforations d'un élément de réservoir (5) selon la revendication 5, **caractérisé en ce qu'**une perforation de l'élément de réservoir (5) est détectée si le capteur (8) d'écoulement massique détecte une modification de la conductivité thermique de l'air dans le premier conduit lorsque la première soupape (9) est fermée.
